# EUROPEAN PATENT APPLICATION

(11) **EP 1 816 147 A1**
(43) Date of publication of application: **08.08.2007**
(21) Application number: 05809455.8
(22) Date of filing: 21.11.2005
(51) Int. Cl.: C08F 8/44

(54) **IONOMER, METHOD FOR PRODUCING SAME AND MOLDED ARTICLE**

(30) Priority: 22.11.2004 JP 2004336964
(71) Applicant: JSR Corporation, Tokyo 104-8410 (JP)
(72) Inventor: KANAE, Kentarou c/o JSR CORPORATION, Tokyo 1048410 (JP); TANAKA, Minoru c/o JSR CORPORATION, Tokyo 1048410 (JP)
(74) Representative: TBK-Patent
(86) International application number: PCT/JP2005/021353
(87) International publication number: WO 2006/054741

(57) **Abstract**

An ionomer obtained by reacting metal compound particles having an average particle diameter of 0.1 µm or less, with a polymer having a structural unit derived from an unsaturated dicarboxylic acid anhydride. There are provided an ionomer which has the same flexibility and moldability as conventional olefin-based thermoplastic elastomers have, is good at mechanical properties, oil resistance and abrasion resistance, and is superior particularly in tensile strength at break and scratch resistance; a process for production thereof; and a molded article thereof.

## Description

### Technical Field

The present invention relates to an ionomer which is superior in rubber elasticity, flexibility, mechanical properties (e.g. tensile strength at break), scratch resistance, abrasion resistance, moldability, heat resistance and weather resistance and suitable as a thermoplastic elastomer; a process for production thereof; and a molded article.

### Background Art

As olefin-based thermoplastic elastomer compositions, there have been known, for example, one obtained by mixing an olefin-based resin with an olefin-based copolymer rubber and one obtained by subjecting an olefin-based resin and an olefin-based copolymer rubber to partial crosslinking using a crosslinking agent. These olefin-based thermoplastic elastomer compositions are superior in heat resistance, weather resistance, low-temperature resistance and moldability and yet are a relatively low-cost material; therefore, they are drawing attention particularly in fields such as automotive parts and the like, as a substitute material for metal part for achieving mainly a lighter weight, a substitute material for RIM urethane part for achieving mainly a longer part life and cost reduction, a substitute material for vulcanized rubber for achieving mainly simplified processing, recycling and cost reduction, or a substitute material for soft polyvinyl chloride for achieving mainly a longer part life and protection of global environment. Thus, the demand for olefin-based thermoplastic elastomer compositions is increasing year by year.

However, conventional olefin-based thermoplastic elastomer compositions are low in surface scratch resistance (scratch resistance); therefore, they have a problem in that they are unsuitable as a material for the surface layer of a molded article requiring scratch resistance, such as inner panel, console box or the like.

Hence, there have recently been proposed, as an olefin-based thermoplastic elastomer superior in scratch resistance, a composition comprising an olefin-based thermoplastic elastomer, an organopolysiloxane and a fatty acid amide, which is superior in sliding abrasion and scratch resistance and intended for use as a material for surface layer (see, for example, Patent Literature 1). The olefin-based thermoplastic elastomer, however, is not sufficiently high in scratch resistance and abrasion resistance and further has a drawback in that the organopolysiloxane and the fatty acid amide bleed out, resulting in inferior appearance.

Patent Literature 1: JP-A-2000-26668

### Disclosure of the Invention

The present invention has been made in view of the above situation. The present invention aims at providing an ionomer which has the same flexibility and moldability as conventional olefin-based thermoplastic elastomer compositions have, is good at mechanical properties, oil resistance and abrasion resistance, and is superior particularly in tensile strength at break and scratch resistance; a process for production thereof; and a molded article thereof.

[1] An ionomer obtained by reacting metal compound particles having an average particle diameter of 0.1 µm or less, with a polymer having a structural unit derived from an unsaturated dicarboxylic acid anhydride.

[2] An ionomer according to [1], wherein a proportion of the metal compound particles is 0.01 to 10 parts by mass relative to 100 parts by mass of the polymer having a structural unit derived from an unsaturated dicarboxylic acid anhydride.

[3] An ionomer according to [1] or [2], wherein the structural unit derived from an unsaturated dicarboxylic acid anhydride is at least one kind of structural unit selected from the group consisting of a structural unit derived from maleic anhydride, a structural unit derived form itaconic anhydride, a structural unit derived from aconitic anhydride and a structural unit derived from citraconic anhydride.

[4] An ionomer according to any of [1] to [3], wherein a metal component of the metal compound particles is at least one kind of metal selected form the group consisting of sodium, magnesium, calcium, zirconium, zinc and aluminum.

[5] An ionomer according to any of [1] to [3], wherein a metal compound constituting the metal compound particles is zinc oxide.

[6] An ionomer according to any of [1] to [5], wherein the polymer having a structural unit derived from an unsaturated dicarboxylic acid anhydride further have a structural unit derived from ethylene, a structural unit derived from an α-olefin of 3 to 10 carbon atoms and, as necessary, a structural unit derived from a non-conjugated diene.

[7] An ionomer according to any of [1] to [6], wherein the polymer having a structural unit derived from an unsaturated dicarboxylic acid anhydride is an adduct formed by addition of an unsaturated dicarboxylic acid anhydride to an olefin-based random copolymer formed by copolymerization of ethylene, an α-olefin of 3 to 10 carbon atoms and, as necessary, a non-conjugated diene.

[8] An ionomer according to any of [1] to [7], wherein the polymer having a structural unit derived from an unsaturated dicarboxylic acid anhydride has 0.01 to 10 parts by mass of a structural unit derived from an unsaturated dicarboxylic acid anhydride, 35 to 94.99 parts by mass of a structural unit derived from ethylene, 5 to 45 parts by mass of a structural unit derived from an α-olefin of 3 to 10 carbon atoms and, as necessary, 0 to 10 parts by mass of a structural unit derived from a non-conjugated diene when the total amount of the polymer having a structural unit derived from an unsaturated dicarboxylic acid anhydride is taken as 100 parts by mass.

[9] An ionomer according to [7] or [8], wherein the polymer having a structural unit derived from an unsaturated dicarboxylic acid anhydride is an adduct formed by graft reaction of the olefin-based random copolymer with the unsaturated dicarboxylic acid anhydride.

[10] A process for producing an ionomer, which comprises a step of subjecting a polymer having a structural unit derived from an unsaturated dicarboxylic acid anhydride, to a heat treatment or a dynamic heat treatment in the presence of metal compound particles having an average particle diameter of 0.1 µm or less.

[11] A molded article obtained by molding a molding material containing an ionomer set forth in any of [1] to [9], by a method selected from injection molding, extrusion molding, vacuum forming, powder slush molding, calendering, transfer molding, solvent casting and press molding.

The ionomer of the present invention has the same flexibility and moldability as conventional olefin-based thermoplastic elastomer compositions have, is good at mechanical properties and abrasion resistance, and is superior particularly in tensile strength at break and scratch resistance; can be easily processed by injection molding, extrusion molding, vacuum forming, powder slush molding, calendering, transfer molding, solvent casting, press molding or the like; and is superior as a thermoplastic elastomer. With the ionomer of the present invention, there can be obtained a molded article which is good at flexibility, oil resistance and mechanical properties and is superior particularly in tensile strength at break and scratch resistance. The molded article of the present invention can be used by being bonded or laminated with an ordinary molded article of olefin-based vulcanized rubber or of olefin-based thermoplastic elastomer composition. With the process for production of ionomer according to the present invention, there can be produced the above-mentioned ionomer advantageously.

### Best Mode for Carrying Out the Invention

The mode for carrying out the present invention is described in detail below. The ionomer of the present invention is obtained by reacting metal compound particles having an average particle diameter of 0.1 µm or less (the metal compound particles may be hereinafter referred to as "particular metal compound particles"), with a polymer having a structural unit derived from an unsaturated dicarboxylic acid anhydride (the polymer may be hereinafter referred to as "unsaturated dicarboxylic acid anhydride unit-containing copolymer"). Here, the average particle diameter is a number average of primary particle diameters determined from the photograph taken using a transmission electron microscope. The "unsaturated dicarboxylic acid anhydride unit" of the "unsaturated dicarboxylic acid anhydride unit-containing copolymer" means "a structural unit derived from an unsaturated dicarboxylic acid anhydride". As the unsaturated dicarboxylic acid anhydride unit-containing copolymer, there is preferably used a copolymer having a structural unit derived from an unsaturated dicarboxylic acid anhydride, a structural unit derived from ethylene, a structural unit derived from an α-olefin of 3 to 10 carbon atoms and, as necessary, a structural unit derived from non-conjugated diene. Further, the unsaturated dicarboxylic acid anhydride unit-containing copolymer is preferably an adduct formed by addition of an unsaturated dicarboxylic acid anhydride to an olefin-based random copolymer formed by copolymerization of ethylene, an α-olefin of 3 to 10 carbon atoms and, as necessary, a non-conjugated diene.

### [Unsaturated dicarboxylic acid anhydride unit-containing copolymer]

The unsaturated dicarboxylic acid anhydride unit-containing copolymer is preferred to have a structural unit derived from ethylene. The content of the structural unit derived from ethylene is preferably 35 to 94.99 parts by mass, more preferably 40 to 89.99 parts by mass, particularly preferably 45 to 84.99 parts by mass when the total amount of the unsaturated dicarboxylic acid anhydride unit-containing copolymer is taken as 100 parts by mass. When the content of the structural unit derived from ethylene is less than 35 parts by mass, the mechanical properties obtained may be low. Meanwhile, when the content of the structural unit derived from ethylene is more than 94.99 parts by mass, it may be difficult to obtain rubber elasticity required for thermoplastic elastomer.

The unsaturated dicarboxylic acid anhydride unit-containing copolymer is preferred to also have a structural unit derived from an α-olefin of 3 to 10 carbon atoms (the α-olefin may be hereinafter referred to as "particular α-olefin"). As specific examples of the structural unit derived form a particular α-olefin, there can be mentioned a structural unit derived form propylene, a structural unit derived from 1-butene, a structural unit derived from 1-pentene, a structural unit derived from 4-methyl-pentene-1,1-hexene, a structural unit derived from 1-heptene, a structural unit derived from 1-octene and a structural unit derived from 1-decene. Of these, preferred are a structural unit derived from propylene, a structural unit derived from 1-butene, a structural unit derived from 1-hexene and a structural unit derived from 1-octene; more preferred are a structural unit derived from propylene and a structural unit derived from 1-butene; particularly preferred is a structural unit derived from propylene. These structural units derived from each individual monomer can be used singly or in combination of two or more kinds.

The content of the structural unit derived from a particular α-olefin is preferably 5 to 45 parts by mass, more preferably 10 to 43 parts by mass, particularly preferably 15 to 40 parts by mass when the total amount of the unsaturated dicarboxylic acid anhydride unit-containing copolymer is taken as 100 parts by mass. When the content of the structural unit derived from a particular α-olefin is less than 5 parts by mass, it may be difficult to obtain rubber elasticity required for thermoplastic elastomer. Meanwhile, when the content of the structural unit derived from a particular α-olefin is more than 45 parts by mass, the elastomer obtained may be low in durability.

The unsaturated dicarboxylic acid anhydride unit-containing copolymer has a structural unit derived from an unsaturated dicarboxylic acid anhydride. The structural unit derived from an unsaturated dicarboxylic acid anhydride is preferably at least one kind of structural unit selected from the group consisting of a structural unit derived from maleic anhydride, a structural unit derived form itaconic anhydride, a structural unit derived from aconitic anhydride and a structural unit derived from citraconic anhydride. The content of the structural unit derived from an unsaturated dicarboxylic acid anhydride is preferably 0.01 to 10 parts by mass, more preferably 0.05 to 8 parts by mass, particularly preferably 0.1 to 5 parts by mass when the total amount of the unsaturated dicarboxylic acid anhydride unit-containing copolymer is taken as 100 parts by mass. When the content of the unsaturated dicarboxylic acid anhydride unit-containing copolymer is less than 0.01 part by mass, the ionomer obtained is low in crosslink density, mechanical properties and scratch resistance, which is not preferred. Meanwhile, when the content of the unsaturated dicarboxylic acid anhydride unit-containing copolymer is more than 10 parts by mass, the ionomer obtained has too high a crosslink density and too high a hardness and may be brittle, which is not preferred.

The unsaturated dicarboxylic acid anhydride unit-containing copolymer can further have, as an optional structural unit derived from a monomer, a structural unit derived from a non-conjugated diene, besides the above-mentioned structural units derived from each individual monomer. As specific examples of the structural unit derived from a non-conjugated diene, there can be mentioned structural units derived form straight-chain acyclic dienes, such as structural unit derived from 1,4-hexadiene, structural unit derived from 1,6-hexadiene, structural unit derived from 1,5-hexadiene and the like; structural units derived from branched chain acyclic dienes, such as structural unit derived from 5-methyl-1,4-hexadiene, structural unit derived from 3,7-dimethyl-1,6-octadiene, structural unit derived from 5,7-dimethylocta-1,6-diene, structural unit derived from 3,7-dimethyl-1,7-octadiene, structural unit derived from 7-methylocta-1,6-diene, structural unit derived from dihydromyrcene and the like; and structural units derived from alicyclic dienes, such as structural unit derived from tetrahydroindene, structural unit derived from methyltetrahydroindene, structural unit derived from dicyclopentadiene, structural unit derived from bicyclo[2.2.1]-hepta-2,5-diene, structural unit derived from 5-methylene-2-norbornene, structural unit derived from 5-ethylidene-2-norbornene, structural unit derived from 5-propenyl-2-norbornene, structural unit derived from 5-isopropylidene-2-norbornene, structural unit derived from 5-cyclohexylidene-2-norbornene, structural unit derived from 5-vinyl-2-norbornene and the like. These structural units derived from each individual monomer may be used singly or in combination of two or more kinds. Of the above structural units each derived from a non-conjugated diene, preferred are a structural unit derived from 1,4-hexadiene, a structural unit derived form dicyclopentadiene, a structural unit derived from 5-ethylidene-2-norbornene, etc.

The content of the structural unit derived from a non-conjugated diene is preferably 0 to 10 parts by mass relative to 100 parts by mass of the total amount of the unsaturated dicarboxylic acid anhydride unit-containing copolymer. When the content of the structural unit derived from a non-conjugated diene is more than 10 parts by mass, the resulting ionomer may be low in durability.

In the unsaturated dicarboxylic acid anhydride unit-containing copolymer used in the present invention, the polystyrene-reduced weight-average molecular weight Mw measured by gel permeation chromatography (GPC) is preferably 1,000 to 3,000,000, more preferably 3,000 to 1,000,000, particularly preferably 5,000 to 700,000. Also, its melt flow rate (MFR) measured at 230°C under a load of 98 N is preferably 0.01 to 100 g/10 min, more preferably 0.1 to 80 g/10 min. Also, its glass transition temperature is preferably -90 to 50°C, more preferably -70 to 40°C. The unsaturated dicarboxylic acid anhydride unit-containing copolymer may be an oil-extended polymer wherein a softening agent has been added during the production (polymerization).

The unsaturated dicarboxylic acid anhydride unit-containing copolymer is preferably an adduct formed by addition of an unsaturated dicarboxylic acid anhydride to an olefin-based random copolymer formed by copolymerization of ethylene, an α-olefin of 3 to 10 carbon atoms and, as necessary, a non-conjugated diene. Thereby, there is first obtained an olefin-based random copolymer having a structural unit derived from ethylene, a structural unit derived from an α-olefin having 3 to 10 carbon atoms and, as necessary, a structural unit derived from a non-conjugated diene; to the olefin-based random copolymer is added an unsaturated dicarboxylic acid anhydride; as a result, there can be obtained a unsaturated dicarboxylic acid anhydride unit-containing copolymer having a structural unit derived from an unsaturated dicarboxylic acid anhydride, a structural unit derived from ethylene, a structural unit derived from an α-olefin having 3 to 10 carbon atoms and, as necessary, a structural unit derived from a non-conjugated diene.

The kind and use amount of each individual monomer (unsaturated dicarboxylic acid anhydride, ethylene, α-olefin of 3 to 10 carbon atoms and non-conjugated diene) which is used as a raw material for obtaining the unsaturated dicarboxylic acid anhydride unit-containing copolymer, are preferably the same as the kind and proportion of each "structural unit derived from individual monomer" (corresponding to the above-mentioned each individual monomer), in the unsaturated dicarboxylic acid anhydride unit-containing copolymer obtained from the above-mentioned raw materials (individual monomers). That is, a preferred example of, for example, the α-olefin of 3 to 10 carbon atoms is preferably a monomer corresponding to an above-mentioned, preferred example of the structural unit derived from an α-olefin of 3 to 10 carbon atoms. Also, a preferred range of, for example, the amount of ethylene used as a raw material is preferably the same as a preferred range of the proportion of the structural unit derived from ethylene which constitutes the unsaturated dicarboxylic acid anhydride unit-containing copolymer.

The olefin-based random copolymer is preferred to be specifically a copolymer comprising 35 to 94.99 parts by mass of ethylene, 5 to 45 parts by mass of an α-olefin of 3 to 10 carbon atoms and, as necessary, 0 to 10 parts by mass of a non-conjugated diene when the total amount of the olefin-based random copolymer is taken as 100 parts by mass. It is preferred that an unsaturated dicarboxylic acid anhydride is added to the olefin-based random copolymer, whereby an unsaturated dicarboxylic acid anhydride unit-containing copolymer is obtained. The unsaturated dicarboxylic acid anhydride is added to 100 parts by mass of the unsaturated dicarboxylic acid anhydride unit-containing copolymer, in an amount of preferably 0.01 to 10 parts by mass, more preferably 0.05 to 8 parts by mass, particularly preferably 0.1 to 5 parts by mass.

Thus, the unsaturated dicarboxylic acid anhydride unit-containing copolymer is preferably obtained by modifying the olefin-based random copolymer with the unsaturated dicarboxylic acid anhydride. In this case, the unsaturated dicarboxylic acid anhydride is introduced (is present) into (at) the side chain or terminal of the olefin-based random copolymer and is not introduced (is not present) into (at) the main chain of the olefin-based random copolymer. That is, the unsaturated dicarboxylic acid anhydride unit-containing copolymer is obtained, for example, by the reaction of the ethylenically unsaturated bond portion of maleic anhydride with the olefin-based random copolymer and can be viewed as an olefin-based random copolymer having cyclic acid anhydride group at the side chain.

Such an unsaturated dicarboxylic acid anhydride unit-containing copolymer can be produced by producing an olefin-based random copolymer by a known appropriate polymerization method and then adding, to the olefin-based random copolymer, an unsaturated dicarboxylic acid anhydride by a graft reaction according to a known appropriate method. As to the specific method for production of the unsaturated dicarboxylic acid anhydride unit-containing copolymer, there is no particular restriction; however, the method described in JP-A-2001-247629 can be used preferably. The olefin-based random copolymer can be obtained by a polymerization method using a medium or low pressure, for example, a method of polymerizing ethylene, an α-olefin and a non-conjugated diene, with hydrogen being fed as a molecular weight modifier as necessary, in the presence of a catalyst composed of a solvent containing a Ziegler-Natta catalyst, a soluble vanadium compound and an organic aluminum compound. The polymerization can be conducted by a gas phase method (a fixed bed or a stirring bed) or a liquid phase method (a slurry or solution method). The soluble vanadium compound is preferably, for example, a reaction product between either of VOC1₃ and VCl₄ and an alcohol. As the alcohol, there can be used methanol, ethanol, n-propanol, isopropanol, n-butanol, sec-butanol, tert-butanol, n-hexanol, n-octanol, 2-ethylhexanol, n-decanol, n-dodecanol or the like. Of these, an alcohol of 3 to 8 carbon atoms is used preferably. As the organic aluminum compound, there can be mentioned, for example, triethyl aluminum, triisobutyl aluminum, tri-n-hexyl aluminum, diethyl aluminum monochloride, diisobutyl aluminum monochloride, ethyl aluminum sesquichloride, butyl aluminum sesquichloride, ethyl aluminum dichloride, butyl aluminum dichloride, and methylaluminoxane which is a reaction product between trimethyl aluminum and water. Of these, particularly preferably used are ethyl aluminum sesquichloride, butyl aluminum sesquichloride, a mixture between ethyl aluminum sesquichloride and triisobutyl aluminum, and a mixture between triisobutyl aluminum and butyl aluminum sesquichloride. As the solvent, hydrocarbons are used preferably. Of these, particularly preferably used are n-pentane, n-hexane, n-heptane, n-octane, isooctane and cyclohexane. These can be used singly or in combination of two or more kinds.

As the method for adding the unsaturated dicarboxylic acid anhydride to the olefin-based random copolymer, there can be mentioned a method of mixing the olefin-based random copolymer with a peroxide and the unsaturated dicarboxylic acid anhydride and heating the resulting mixture.

The peroxide is not particularly restricted and there can be mentioned, for example, organic peroxides such as 1,1-di-tert-butyl peroxy-3,3,5-trimethylcyclohexane, di-tert-butyl peroxide, dicumyl peroxide, tert-butylcumyl peroxide, 2,5-dimethyl-2-5-di(tert-butylperoxy)hexane, and 2,5-dimethyl-2,5-di(tert-butylperoxy)hexyne-3,1,3-bis(tert-butylperoxyisopropyl)benzene. These peroxides can be used singly or in combination of two or more kinds. The proportion of the peroxide used is preferably 0.001 to 3 parts by mass, more preferably 0.01 to 1 part by mass relative to 1 part by mass of the unsaturated dicarboxylic acid anhydride.

There is no particular restriction as to the method for mixing and heating the olefin-based random copolymer and the unsaturated dicarboxylic acid anhydride; and there can be mentioned batch type melting and kneading apparatuses such as open mixing roll, non-open Banbury mixer, kneader and the like, and continuous melting and kneading apparatuses such as single screw extruder, continuous double screw extruder of co-rotating type, continuous double screw extruder of counter-rotating type, and the like. The temperature of the heating is preferably 100 to 300°C, more preferably 150 to 250°C, and the time of the heating is preferably 10 to 900 seconds, more preferably 30 to 600 seconds.

In the unsaturated dicarboxylic acid anhydride bond-containing copolymer obtained by the above method, the reaction ratio of the unsaturated dicarboxylic acid anhydride can be measured by infrared spectrophotometry (FT-IR). For example, a maleic anhydride unit-containing copolymer (wherein maleic anhydride is used for addition as an unsaturated dicarboxylic acid anhydride) is freeze-ground, then subjected to Soxhlet extraction for 8 hours for removal of remaining unreacted maleic anhydride, and dried. The dried material is dissolved in hot xylene, the solution is molded, by a hot press, into a film of about 0.1 mm in thickness, the film is measured by FT-IR. Then, comparison is made between the absorbance of [C=O] absorption of maleic anhydride at 1,785 cm⁻¹ and the absorbance of [C-H] absorption of olefin-based random copolymer at 840 cm⁻¹, and a reaction ratio is calculated.

### [Particular metal compound particles]

The particular metal compound particles used in the present invention functions so that the metal component thereof combines to the functional group (carboxyl group) of the unsaturated dicarboxylic acid anhydride unit-containing copolymer by ionic bond and thereby a crosslinked structure is formed between the molecules of the unsaturated dicarboxylic acid unit-containing copolymer. The particular metal compound particles have an average particle diameter of 0.1 µm or less, preferably 0.08 µm or less, more preferably 0.05 to 0.08 µm, particularly preferably 0.008 to 0.05 µm. Use of metal compound particles having too large an average particle diameter tends to give an ionomer low in mechanical properties and scratch resistance.

As the metal compound constituting the particular metal compound particles, there can be used a metal oxide, a metal hydroxide, a metal salt, a metal complex, etc. As specific examples of the metal component in such a metal compound, there can be mentioned metals of groups I to VIII of periodic table, such as lithium, potassium, sodium, aluminum, zirconium, magnesium, calcium, barium, cesium, strontium, rubidium, titanium, zinc, copper, iron, tin, lead and the like. Of these, preferred are sodium, magnesium, calcium, zirconium, zinc and aluminum.

As specific examples of the metal oxide constituting the particular metal compound particles, there can be mentioned CuO, MgO, BaO, ZnO, Al₂O₃, Fe₂O₃, SnO, CaO, TiO₂, ZrO₂, etc. Of these, ZnO (zinc oxide) is preferred. As specific examples of the metal hydroxide constituting the particular metal compound particles, there can be mentioned LiOH, NaOH, KOH, Cu(OH)₂, Cu₂O(OH)₂, Mg(OH)₂, Mg₂O(OH)₂, Ba(OH)₂, Zn(OH)₂, Sn(OH)₂, Ca(OH)₂, etc. These metal compounds can be used singly or in combination of two or more kinds. The metal compound particles composed of these metal compounds may be treated with a silane coupling agent or a higher fatty acid in order to increase the dispersibility of the particles in the unsaturated dicarboxylic acid anhydride unit-containing copolymer.

The proportion of the particular metal compound particles used is preferably 0.01 to 10 parts by mass, more preferably 0.05 to 8 parts by mass, particularly preferably 0.1 to 5 parts by mass relative to 100 parts by mass of the unsaturated dicarboxylic acid anhydride unit-containing copolymer. When the proportion is less than 0.01 part by mass, the resulting ionomer is low in crosslink density and tends to be low in mechanical properties and scratch resistance. Meanwhile, when the proportion is more than 10 parts by mass, the resulting ionomer has too high a crosslink density and too high a hardness and tends to be brittle, which is not preferred.

In the present invention, there can be used, besides the particular metal compound particles, a metal salt of carboxylic acid as an activating agent in order to increase the miscibility of the particular metal compound particles with the unsaturated dicarboxylic acid anhydride unit-containing copolymer and also enhance the heat resistance of the ionomer obtained. As the metal salt of carboxylic acid, a metal salt of mono-valent carboxylic acid is used preferably and the carboxylic acid is preferred to have 3 to 23 carbon atoms. As specific examples of such a carboxylic acid, there can be mentioned propionic acid, acrylic acid, butyric acid, methacrylic acid, valeric acid, hexanoic acid, octanoic acid, 2-ethylhexanoic acid, decanoic acid, palmitic acid, myristic acid, lauric acid, stearic acid, oleic acid, behenic acid, naphthenic acid and benzoic acid. As the metal component of the metal salt used as an activating agent, there can be appropriately selected from the metals mentioned above as examples of the metal component of the particular metal compound particles. The metal component of the metal salt is preferably the same as the metal component of the particular metal compound particles.

The proportion of the metal salt used as an activating agent is preferably 0.3 to 20 parts by mass, more preferably 1 to 15 parts by mass relative to 100 parts by mass of the unsaturated dicarboxylic acid anhydride unit-containing copolymer. When the proportion is less than 0.3 part by mass, the effect obtained by using the activating agent is not exhibited sufficiently. Meanwhile, when the proportion is more than 20 arts by mass, the resulting ionomer may be strikingly low in oil resistance and mechanical properties.

### [Ionomer]

The ionomer of the present invention is obtained by subjecting the unsaturated dicarboxylic acid anhydride unit-containing copolymer to a heat treatment or a dynamic heat treatment, preferably to a dynamic heat treatment, in the presence of the particular metal compound particles and the activating agent used as necessary. Here, the "dynamic heat treatment" refers to both of a treatment of applying a shear force and a treatment of applying a heat. Such a dynamic heat treatment can be conducted, for example, by using a melting and kneading apparatus ordinarily used for preparation or processing of resin or elastomer. This melting and kneading apparatus may be a batch type or a continuous type. As specific examples of the melting and kneading apparatus, there can be mentioned batch type melting and kneading apparatuses such as open mixing roll, non-open Banbury mixer, kneader and the like; and continuous melting and kneading apparatuses such as single screw extruder, continuous double screw extruder of co-rotating type, continuous double screw extruder of counter-rotating type, and the like.

Preferably, the dynamic heat treatment employed for production of the ionomer of the present invention is conducted to a premix containing a unsaturated dicarboxylic acid anhydride unit-containing copolymer, particular metal compound particles and an activating agent used as necessary. As specific methods for conducting the dynamic heat treatment, the following methods (1) and (2) can be mentioned.

(1) A method of conducting a dynamic heat treatment, which comprises continuously applying shear for heat generation using a double screw extruder, to a mixture containing a unsaturated dicarboxylic acid anhydride unit-containing copolymer, particular metal compound particles and an activating agent used as necessary.

(2) A method of conducting a dynamic heat treatment, which comprises applying shear for heat generation using a batch type kneader, to a mixture containing a unsaturated dicarboxylic acid anhydride unit-containing copolymer, particular metal compound particles and an activating agent used as necessary.

The conditions of the dynamic heat treatment differ depending upon the melting point of the unsaturated dicarboxylic acid anhydride unit-containing copolymer used, the kind of the particular metal compound particles used, the kind of the melting and kneading apparatus used, etc. However, the treatment temperature is 80 to 350°C, preferably 100 to 300°C; the treatment time is 20 seconds to 320 minutes, preferably 30 seconds to 25 minutes; and the shear force applied to the mixture is 10 to 2,000 s⁻¹, preferably 100 to 1,000 s⁻¹ in terms of shear rate.

In the present invention, there can be used, besides the dynamic heat treatment, a heat treatment for obtaining an ionomer, which comprises subjecting a unsaturated dicarboxylic acid anhydride unit-containing copolymer to a heat treatment in an appropriate solvent in the presence of particular metal compound particles and an activating agent used as necessary. As a specific method for conducting the heat treatment, the following method (3) can be mentioned.

(3) A method of conducting a heat treatment, which comprises mixing, with heating, a solution of a unsaturated dicarboxylic acid anhydride unit-containing copolymer dissolved in an appropriate solvent and a solution or dispersion of particular metal compound particles and an activating agent used as necessary, dissolved or dispersed in an appropriate solvent and subjecting the resulting mixture to solvent removal.

The solvent used in the method (3) is not particularly restricted; however, there can be used preferably, for example, aliphatic hydrocarbons, alicyclic hydrocarbons, aromatic hydrocarbons and halides thereof because the unsaturated dicarboxylic acid anhydride unit-containing copolymer is easily soluble therein. As specific examples of such solvents, there can be mentioned butane, pentane, hexane, heptane, 2-butene, 2-methyl-2-butene, cyclopentane, methylcyclopentane, cyclohexane, isooctane, benzene, toluene, xylene, chlorobenzene, dichloromethane and dichloroethane.

When the solubility of the particular metal compound particles and activating agent used, in the above solvent is low, there may be prepared a dispersion wherein the particular metal compound particles and activating agent are dispersed in the solvent in a suspended state, or other solvent and/or an additive may be added in order to dissolve the particular metal compound particles and activating agent.

The proportion of the unsaturated dicarboxylic acid anhydride unit-containing copolymer in the solution is preferably 0.1 to 60% by mass, more preferably 0.2 to 50% by mass.

The proportion of the total of the particular metal compound particles and the activating agent in the solution or dispersion is preferably 0.01 to 60% by mass, more preferably 0.05 to 50% by mass.

The mixing of the solution or dispersion can be conducted using a solution stirrer used ordinarily, and the temperature employed in the mixing is preferably 20°C or more, more preferably 30°C or more. Further, in the mixing of the solution or dispersion, an appropriate catalyst may be added in order to accelerate a metal-crosslinking reaction.

The resulting mixture is subjected to solvent removal by a well-known method such as heating, reduced pressure, steam distillation or the like, whereby an ionomer of the present invention is obtained. Or, the mixture is cast on an appropriate substrate, followed by solvent removal, whereby an ionomer of the present invention can be obtained as a film.

The thus-obtained ionomer of the present invention has a melt flow rate (MFR) of preferably 0.1 g/10 min or more, more preferably 0.5 g/10 min or more as measured at 230°C under a load of 98 N, and an tension set of preferably 20% or less, more preferably 15% or less; therefore, it is equivalent to conventional ionomers in rubber elasticity and moldability and, as is clear from Examples described later, has good flexibility, mechanical properties and abrasion resistance, is high particularly in tensile strength at break and is superior in scratch resistance.

### [Ionomer composition]

The ionomer of the present invention can be used as an ionomer composition by mixing with a polymer compound selected from a thermoplastic resin and a rubber both other than the above-mentioned unsaturated dicarboxylic acid anhydride unit-containing copolymer (the polymer compound is hereinafter referred to as "other polymer compound"), a softening agent, etc. There is no particular restriction as to the other polymer compound constituting the ionomer composition as long as it is other than the unsaturated dicarboxylic acid anhydride unit-containing copolymer dispersion of the particular, functional group-containing copolymer, and various polymer compounds may be used. As specific examples of the other polymer compound, there can be mentioned polyethylene, polyisobutylene, ethylene-vinyl acetate copolymer, ethylene acrylate, ethylene acrylic acid copolymer, polypropylene, polyisobutylene, chlorinated polypropylene, 4-methylpentene-1 resin, polystyrene, ABS resin, AS resin, acrylic resin, methacrylic resin, vinyl chloride resin, vinylidene chloride resin, polyamide resin, polycarbonate, ethylene-α-olefin copolymer rubber, ethylene-α-olefin-non-conjugated diene copolymer rubber, styrene-butadiene rubber and hydrogenation product thereof, styrene-butadiene block copolymer and hydrogenation product thereof, butadiene block copolymer and hydrogenation product thereof, butadiene rubber and hydrogenation product thereof, isoprene rubber and hydrogenation product thereof, styrene-isoprene rubber and hydrogenation product thereof, nitrile rubber and hydrogenation product thereof, acrylic rubber, silicone rubber, fluororubber, butyl rubber and natural rubber. Polyethylene and polypropylene are preferred particularly. These polymer compounds can be used singly or in combination of two or more kinds. The proportion of the other polymer compound used is preferably 300 parts by mass or less, more preferably 1 to 200 parts by mass relative to 100 parts by mass of the unsaturated dicarboxylic acid anhydride unit-containing copolymer constituting the ionomer.

The softening agent constituting the ionomer composition may be added into the monomers solution for obtaining an olefin-based random copolymer, or may be added in or after production of the ionomer.

The softening agent constituting the ionomer composition is not particularly restricted as long as it is a softening agent for rubber, ordinarily used. As the softening agent, there can be mentioned, for example, mineral oil-based hydrocarbons of paraffinic type, naphthenic type or aromatic type and low-molecular hydrocarbons of polybutene type, polybutadiene type or the like. Of these, there are preferred mineral oil-based hydrocarbons having a molecular weight of 300 to 2,000, particularly 500 to 1,500 in terms of weight-average molecular weight.

The softening agent for rubber, composed of a mineral oil-based hydrocarbon is generally a mixture of aromatic hydrocarbons, naphthenic hydrocarbons and paraffinic hydrocarbons; and it is classified as a paraffinic oil when the carbon atoms of paraffinic hydrocarbons are 50% or more of the total carbon atoms, as a naphthenic oil when the carbon atoms of naphthenic hydrocarbons are 30 to 45% of the total carbon atoms, and as an aromatic oil when the carbon atoms of aromatic hydrocarbons are 30% or more of the total carbon atoms. In the present invention, a paraffinic oil is preferred and a hydrogenated paraffinic oil is particularly preferred. Further, with respect to the mineral oil-based hydrocarbon, the kinematic viscosity at 40°C is preferably 20 to 800 cSt, particularly preferably 50 to 600 cSt and the pour point is preferably -40 to 0°C, particularly preferably -30 to 0°C. The proportion of the softening agent used is preferably 100 parts by mass or less, more preferably 1 to 67 parts by mass relative to 100 parts by mass of the unsaturated dicarboxylic acid anhydride unit-containing copolymer constituting the ionomer.

The ionomer composition of the present invention may be prepared by mixing, into the ionomer, the other polymer compound and/or the softening agent; however, the following methods (4) and (5) can be mentioned as preferred methods for preparation.

(4) A method of mixing the unsaturated dicarboxylic acid anhydride unit-containing copolymer, the particular metal compound particles, the activating agent used as necessary, and the other polymer compound and/or the softening agent and subjecting the resulting mixture to a dynamic heat treatment.

The conditions of the dynamic heat treatment in the above method are the same as the above-mentioned conditions of the dynamic heat treatment employed for production of the ionomer.

(5) A method of mixing, with heating, a solution of the unsaturated dicarboxylic acid anhydride unit-containing copolymer dissolved in an appropriate solvent, a solution or dispersion of the particular metal compound particles and the activating agent used as necessary, dissolved or dispersed in an appropriate solvent, and a solution or dispersion of the polymer compound and/or the softening agent, and subjecting the resulting mixture to solvent removal.

The solvent used in this method is not particularly restricted; however, it is preferably the same solvent as used in the above-mentioned heat treatment method (3) employed for production of the ionomer.

When the solubility of the particular metal compound particles and activating agent used, in the above solvent is low, there may be prepared a dispersion wherein the particular metal compound particles and activating agent are dispersed in the solvent in a suspended state, or other solvent and/or an additive may be added in order to dissolve the particular metal compound particles and activating agent.

When the solubility of the polymer compound and the softening agent in the above solvent is low, they may be dispersed in the solvent in a suspended state, or other solvent and/or additive may be added in order to dissolve the polymer compound and the softening agent, or it is possible to add, after solvent removal, the polymer compound and the softening agent and subject the resulting mixture to a dynamic heat treatment.

The mixing of different solutions or of different solution(s) and different dispersion(s) can be conducted using a solution stirrer used ordinarily, and the temperature employed in the mixing is preferably 20°C or more, more preferably 30°C or more. Further, in the mixing, an appropriate catalyst may be added in order to accelerate a metal-crosslinking reaction.

The resulting mixture is subjected to solvent removal by a well-known method such as heating, reduced pressure, steam distillation or the like, whereby an ionomer composition is obtained. Or, the mixture is cast on an appropriate substrate, followed by solvent removal, whereby an ionomer composition can be obtained as a film.

The ionomer composition may as necessary contain various additives such as lubricant, stabilizers (e.g. age resister, heat stabilizer, weather resistant, metal deactivator, ultraviolet absorber, light stabilizer and copper harm inhibitor), germicidal and mildewcidal agent, dispersing agent, plasticizer, nucleating agent for crystallization, flame retardant, tackifier, foaming aid, coloring agents (e.g. titanium oxide and carbon black), metal (e.g. ferrite) powder, inorganic fibers (e.g. glass fiber and metal fiber), organic fibers (e.g. carbon fiber and aramid fiber), composite fiber, inorganic whiskers (e.g. potassium titanate whiskers), fillers (e.g. glass beads, glass balloon, glass flake, asbestos, mica, calcium carbonate, talc, silica, calcium silicate, hydrotalcite, kaolin, diatomaceous earth, graphite, pumice, ebonite powder, cotton flock, cork powder, barium sulfate, fluoroplastic and polymer beads) and mixtures thereof, fillers (e.g. polyolefin wax, cellulose powder, rubber powder and wood flour), and low-molecular polymer.

### [Molded article]

The ionomer of the present invention or the ionomer composition thereof can be easily processed by a molding method such as injection molding, extrusion molding, vacuum forming, powder slush molding, calendering, transfer molding, solvent casting, press molding or the like, and can give a molded article which has good rubber elasticity, is superior in flexibility and mechanical properties and is particularly superior in tensile strength at break and scratch resistance. Such a molded article can also be used by being bonded or laminated with an ordinary olefin-based vulcanized rubber molded article or with an ordinary ionomer molded article.

Being superior in rubber elasticity, flexibility, moldability, scratch resistance and abrasion resistance, the molded article of the present invention can be used in automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; scratch-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; sealing material; protective film for image (e.g. picture); decorative film for construction material; part for medical instruments; electric wire; ordinary processed products such as daily sundry, sporting goods and the like; CMP pad for semiconductor polishing; various films for electronic parts, such as protective film, impact-absorbing film, polarizing film, film for absorption of particular wavelength, and the like; and protective film used in production of flat panel display (FPD) for semiconductor apparatus, liquid crystal display apparatus, etc.

### Examples

Next, description is made on Examples conducted for specifically carrying out the present invention. However, the present invention is in no way restricted thereto. Incidentally, in the following description, "parts" and "%" refer to mass parts and mass %, respectively, unless otherwise specified.

### [Unsaturated dicarboxylic acid anhydride unit-containing copolymer]

### Unsaturated dicarboxylic acid anhydride unit-containing copolymer (A):

A maleic anhydride unit-containing copolymer [a product of JSR, "T 7741" (trade name)] having a Mooney viscosity (ML₁₊₄ at 100°C) of 82, obtained by introducing, by grafting using an organic peroxide, 0.5 part by mass of maleic anhydride into an ethylene-α-olefin copolymer containing 72.6 parts by mass of a structural unit derived from ethylene and 26.9 parts by mass of a structural unit derived from propylene. This copolymer is named as (A).

### [Particular metal compound particles]

### (1) Metal compound particles (B-1):

Zinc oxide particles [Nanofine (trade name), a product of Sakai Chemical Industry Co.] having an average particle diameter of 0.01 µm.

### (2) Metal compound particles (B-2):

Zinc oxide particles [Active Zinc (trade name), a product of Sakai Chemical Industry Co.] having an average particle diameter of 0.6 µm.

### (3) Metal compound particles (B-3):

Magnesium hydroxide particles [Kisuma 5N (trade name), a product of Kyowa Chemical Co., Ltd.] having an average particle diameter of 1.0 µm.

### [Other polymer compounds]

### Polymer compound (C-1):

A hydrogenated styrene-butadiene block copolymer [Dynaron 8903 (trade name), a product of JSR] having an MFR of 30 g/10 min as measured at 230°C under a load of 21 N.

### Polymer compound (C-2):

A polypropylene [XF 9520 (trade name), a product of Chisso Corporation] having an MFR of 20 g/10 min as measured at 230°C under a load of 21 N.

### [Other additives]

### Activating agent (D-1):

Zinc stearate [Zinc Stearate Z-2000 (trade name), a product of Sakai Chemical Industry Co.].

### Activating agent (D-2):

Magnesium stearate [Magnesium Stearate (trade name), a product of Sakai Chemical Industry Co.].

### Anti-oxidant (E):

Phenol type anti-oxidant [Irganox 1010 (trade name), a product of Chiba Specialty Chemicals Co.].

### (Example 1)

Into a 10-liter, dual arm type pressure kneader (a product of Moriyama Co.) heated at 230°C were fed each independently 100 parts by mass of an unsaturated dicarboxylic acid anhydride unit-containing copolymer (A), 0.7 part by mass of metal compound particles (B-1), 2.4 parts by mass of an activating agent (D-1) and 0.2 part by mass of an anti-oxidant (E). They were kneaded at 40 rpm for 20 minutes at a shear rate of 200 s⁻¹. Then, the molten, lumpy, kneaded material obtained was fed into Feeder Ruder (a product of Moriyama Co.) set at 180°C and 40 rpm, to obtain a pelletized ionomer. The ionomer pellets obtained were press-molded using an electrically heated press molder (a product of Kansai Roll Co.) under the conditions of die temperature = 180°C, pressing and heating time = 10 minutes and pressing and cooling time = 5 minutes, to obtain a molded sheet of 12 cm x 12 cm x 0.2 cm.

### [Evaluation of ionomer]

The ionomer obtained was measured for melt flow rate (MFR) as an index of fluidity, under the conditions of temperature = 230°C and load = 98 N. The result is shown in Table 1.

The obtained molded sheet of ionomer was measured for durometer A hardness (as an index of flexibility), tension set (as an index of rubber elasticity), tensile strength at break and tensile elongation at break (both as mechanical properties), and abrasion resistance according to the following methods, and further was subjected to the following Scratch resistance test 1, Scratch resistance test 2 and oil resistance test. The results are shown in Table 1.
(1) Durometer A hardness: Measured according to JIS K 6253.
(2) Tension set: Measured according to JIS K 6262.
(3) Tensile strength at break and tensile elongation at break: Measured according to JIS K 6251.
(4) Abrasion resistance: DIN abrasion test was conducted according to JIS K 6264 to measure an abrasion volume.
(5) Scratch resistance test 1: Using a Taber scratch tester produced by Toyoseiki Seisakusho Co., a metal nail to which a 10-kg load had been applied, was scanned on a molded sheet. This operation was repeated, with increasing the load by 10 kg each, until the surface of the molded sheet came to have scratch. A load when the molded sheet surface first had scratch, was recorded. In this test, as the recorded load is larger, the scratch resistance of the molded sheet is higher.
(6) Scratch resistance test 2: A molded sheet was rubbed at the surface with a thumbnail and the surface was observed visually. The molded sheet was rated as ○ when there was no scratch and as x when there was scratch.
(7) Oil resistance test: A molded sheet was immersed in a test oil (IRM-903) at 23°C for 24 hours and its volume change ratio (ΔV) was determined, according to JIS K 6258.

### (Example 2)

An ionomer composition was obtained in the same manner as in Example 1 except that the content of the unsaturated dicarboxylic acid anhydride unit-containing copolymer (A) was changed to 50 parts by mass and there was further used 50 parts by mass of a polymer compound (C-1). A molded sheet of the ionomer composition was produced and evaluated, in the same manner as in Example 1. The results are shown in Table 1. In Table 1, the "proportions" of individual components are shown in parts by mass.

### (Example 3)

An ionomer composition was obtained in the same manner as in Example 1 except that the content of the unsaturated dicarboxylic acid anhydride unit-containing copolymer (A) was changed to 50 parts by mass and there were further used 45 parts by mass of a polymer compound (C-1) and 5 parts by mass of a polymer compound (C-2). A molded sheet of the ionomer composition was produced and evaluated, in the same manner as in Example 1. The results are shown in Table 1.

### (Comparative Example 1)

A molten, lumpy kneaded material was produced in the same manner as in Example 1 except that there was used neither metal compound particles (B-1) nor activating agent (D-2). The kneaded material was pelletized in the same manner as in Example 1.

The pellets obtained were press-molded in the same as in Example 1 to produce a sheet. The sheet was evaluated. The results are shown in Table 1.

### (Comparative Example 2)

An ionomer was obtained in the same manner as in Example 1 except that the metal compound particles (zinc oxide particles) (B-1) were replaced by metal compound particles (zinc oxide particles) (B-2). A molded sheet of the ionomer was produced and evaluated, in the same manner as in Example 1. The results are shown in Table 1.

### (Comparative Example 3)

An ionomer was obtained in the same manner as in Example 1 except that the metal compound particles (zinc oxide particles) (B-1) was replaced by 1 part by mass of metal compound particles (magnesium hydroxide particles) (B-3) and the activating agent (D-1) was replaced by 4.5 parts by mass of an activating agent (D-2). A molded sheet of the ionomer was produced and evaluated, in the same manner as in Example 1. The results are shown in Table 1.

**Table 1**

| | Example 1 | Example 2 | Example 3 | Comparative Example 1 | Comparative Example 2 | Comparative Example 3 |
|---|---|---|---|---|---|---|
| Maleic anhydride unit-containing copolymer (A) | 100 | 50 | 50 | 100 | 100 | 100 |
| (B-1) Zinc oxide particles (0.01 µm) | 0.7 | 0.7 | 0.7 | | | |
| (B-2) Zinc oxide particles (0.6 µm) | | | | | 0.7 | |
| (B-3) Magnesium hydroxide particles (1.0 µm) | | | | | | 1 |
| Polymer compound (C-1) | | 50 | 45 | | | |
| Polymer compound (C-2) | | | 5 | | | |
| Activating agent (D-1) | 2.4 | 2.4 | 2.4 | | 2.4 | |
| Activating agent (D-2) | | | | | | 4.5 |
| Anti-oxidant (E) | 0.2 | 0.2 | 0.2 | 0.2 | 0.2 | 0.2 |
| MFR (230°C, 98 N) (g/10 min) | 21 | 17 | 17 | 9 | No flow and unable to measure | No flow and unable to measure |
| Tensile strength at break (MPa) | 12.4 | 13.7 | 12.3 | 2.9 | | |
| Tensile elongation at break (%) | 770 | 760 | 750 | 890 | Unable to mold | Unable to mold |
| Hardness (durometer A) | 61 | 57 | 60 | 59 | | |
| Tension set (%) | 5 | 4 | 4 | 10 | | |
| Abrasion volume (cm³) | 0.078 | 0.040 | 0.047 | 0.157 | | |
| Scratch resistance test 1 | 100 | 280 | 150 | 30 | | |
| Scratch resistance test 2 | o | o | o | X | | |
| Oil resistance test (%) | 40.4 | 46.7 | 43.3 | 101.2 | | |

As is clear from the results of Table 1, each ionomer or its composition according to Examples 1 to 3 is superior in any of mechanical properties, scratch resistance, oil resistance and abrasion resistance. In contrast, in Comparative Example 1, the copolymer had not been crosslinked with any metal ion and accordingly was inferior in mechanical properties, scratch resistance, oil resistance and abrasion resistance. In Comparative Examples 2 and 3, the average particle diameters of the metal compound particles used were larger than 0.1 µm and accordingly the crosslinking was excessive, resulting in no flow and failure in molding.

### Industrial Applicability

Being superior in rubber elasticity, flexibility, moldability, scratch resistance and abrasion resistance, the ionomer of the present invention can be widely used in automotive applications such as bumper, mall as exterior trim, gasket for wind shielding, gasket for door shielding, gasket for trunk sealing, roof side rail, emblem, inner panel, door trim, skin material for inner or outer trim (e.g. console box), weather strip and the like; scratch-resistant leather sheet; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; light electric appliance applications such as packing, skin material, housing and the like; roll and cleaning blade for information appliances; film for electronic parts; sealing material; protective film for image (e.g. picture); decorative film for construction material; part for medical instruments; electric wire; ordinary processed products such as daily sundry, sporting goods and the like; CMP pad for semiconductor polishing; various films for electronic parts, such as protective film, impact-absorbing film, polarizing film, film for absorption of particular wavelength, and the like; and protective film used in production of flat panel display (FPD) for semiconductor apparatus, liquid crystal display apparatus, etc.

## Claims

1. An ionomer obtained by reacting metal compound particles having an average particle diameter of 0.1 µm or less, with a polymer having a structural unit derived from an unsaturated dicarboxylic acid anhydride.

2. An ionomer according to Claim 1, wherein a proportion of the metal compound particles is 0.01 to 10 parts by mass relative to 100 parts by mass of the polymer having a structural unit derived from an unsaturated dicarboxylic acid anhydride.

3. An ionomer according to Claim 1 or 2, wherein the structural unit derived from an unsaturated dicarboxylic acid anhydride is at least one kind of structural unit selected from the group consisting of a structural unit derived from maleic anhydride, a structural unit derived form itaconic anhydride, a structural unit derived from aconitic anhydride and a structural unit derived from citraconic anhydride.

4. An ionomer according to any of Claims 1 to 3, wherein a metal component of the metal compound particles is at least one kind of metal selected form the group consisting of sodium, magnesium, calcium, zirconium, zinc and aluminum.

5. An ionomer according to any of Claims 1 to 3, wherein a metal compound constituting the metal compound particles is zinc oxide.

6. An ionomer according to any of Claims 1 to 5, wherein the polymer having a structural unit derived from an unsaturated dicarboxylic acid anhydride further have a structural unit derived from ethylene, a structural unit derived from an α-olefin of 3 to 10 carbon atoms and, as necessary, a structural unit derived from a non-conjugated diene.

7. An ionomer according to any of Claims 1 to 6, wherein the polymer having a structural unit derived from an unsaturated dicarboxylic acid anhydride is an adduct formed by addition of an unsaturated dicarboxylic acid anhydride to an olefin-based random copolymer formed by copolymerization of ethylene, an α-olefin of 3 to 10 carbon atoms and, as necessary, a non-conjugated diene.

8. An ionomer according to any of Claims 1 to 7, wherein the polymer having a structural unit derived from an unsaturated dicarboxylic acid anhydride has 0.01 to 10 parts by mass of a structural unit derived from an unsaturated dicarboxylic acid anhydride, 35 to 94.99 parts by mass of a structural unit derived from ethylene, 5 to 45 parts by mass of a structural unit derived from an α-olefin of 3 to 10 carbon atoms and, as necessary, 0 to 10 parts by mass of a structural unit derived from a non-conjugated diene when the total amount of the polymer having a structural unit derived from an unsaturated dicarboxylic acid anhydride is taken as 100 parts by mass.

9. An ionomer according to Claim 7 or 8, wherein the polymer having a structural unit derived from an unsaturated dicarboxylic acid anhydride is an adduct formed by graft reaction of the olefin-based random copolymer with the unsaturated dicarboxylic acid anhydride.

10. A process for producing an ionomer, which comprises a step of subjecting a polymer having a structural unit derived from an unsaturated dicarboxylic acid anhydride, to a heat treatment or a dynamic heat treatment in the presence of a metal compound particles having an average particle diameter of 0.1 µm or less.

11. A molded article obtained by molding a molding material containing an ionomer set forth in any of Claims 1 to 9, by a method selected from injection molding, extrusion molding, vacuum forming, powder slush molding, calendering, transfer molding, solvent casting and press molding.
